**Europäisches Patentamt**

**European Patent Office**

**Office européen des brevets**

(19)

(11) Veröffentlichungsnummer : **0 132 502**
**B1**

(12) **EUROPÄISCHE PATENTSCHRIFT**

(45) Veröffentlichungstag der Patentschrift :
27.07.88

(51) Int. Cl.⁴ : **B 60 G 21/04, F 16 F 1/38**

(21) Anmeldenummer : 84103469.7

(22) Anmeldetag : 29.03.84

(54) Gummi-Metall-Buchse, insbesondere für die Lagerung eines Stabilisators an einem Kraftfahrzeug.

(30) Priorität : 02.08.83 DE 3327817

(43) Veröffentlichungstag der Anmeldung :
13.02.85 Patentblatt 85/07

(45) Bekanntmachung des Hinweises auf die Patenterteilung : 27.07.88 Patentblatt 88/30

(84) Benannte Vertragsstaaten :
AT DE FR GB IT

(56) Entgegenhaltungen :
EP-A- 0 020 790
EP-A- 0 093 625
AT-B- 337 502
DE-A- 1 955 308
DE-A- 2 358 736
DE-A- 2 608 553
DE-B- 1 066 056
FR-A- 2 214 067
US-A- 3 041 889
US-A- 3 071 850

(73) Patentinhaber : Jörn, Frieda
Porschestrasse 10
D-7012 Fellbach (DE)

(72) Erfinder : Jörn, Raoul
Post Wasserburg a.B.
D-8992 Hengnau Nr. 53 1/7 (DE)

(74) Vertreter : Neubauer, Hans-Jürgen, Dipl.-Phys.
Fauststrasse 30
D-8070 Ingolstadt (DE)

## Beschreibung

Die Erfindung betrifft eine Gummi-Metall-Buchse, insbesondere für die Lagerung eines Stabilisators an einem Kraftfahrzeug, gemäß dem Oberbegriff des Anspruchs 1.

Eine bekannte Metallbuchse (US-A-30 71 850) ist mit einem, die Gummi-Metall-Buchse umschließenden Aufnahmeauge ausgeführt, mit Gummimetallelementen innerhalb des Aufnahmeauges, die ein zu lagerndes Innenteil umschließen und die im Aufnahmeauge radial verspannbar sind. Dabei ist nur ein Gummimetallelement vorgesehen, das aus einem biegsamen Metallstreifen mit einem im wesentlichen axial verlaufenden, durchgehenden Spalt besteht, und wobei auf den Metallstreifen beidseitig je eine Gummischicht aufvulkanisiert ist. Die Montage der Gummi-Metall-Buchse erfolgt durch ein axiales Aufpressen auf das zu lagernde Innenteil. Bei dieser Montage besteht die Gefahr unerwünschter Spannungen im Gummi oder auch der Verletzung der Gummischicht. Die Montage der Gummi-Metall-Buchse ist auf diese Art bei der Lagerung eines Stabilisatorstabs schon wegen dessen Länge und Biegungen nicht möglich. Die auf den Metallstreifen aufgebrachten Gummischichten haben eine gleichmäßige Dicke. Bei kardanischen Bewegungen besteht daher die Gefahr, daß zwischen den durch die Bewegung entlasteten Gummibereichen und dem Innenteil Spalte entstehen. Dies kann zu reibenden Relativbewegungen zwischen diesen Gummibereichen und dem Innenteil führen, wodurch die Gefahr eines schnellen Verschleißes vorliegt. Insbesondere bei der Verwendung einer solchen Gummi-Metall-Buchse zur Lagerung eines Stabilisatorstabs können in solche Spalte Staub- und Sandteilchen sowie Wasser eindringen, wodurch ein schneller Verschleiß sowohl des Stabilisatorstabs als auch der Gummischicht hervorgerufen wird.

Bei einer weiter bekannten Gummi-Metall-Buchse (AT-B-337 502) ist ein Gummiteil zylindrisch geformt und ein umgebendes Aufnahmeauge zu den seitlichen Öffnungen hin oval aufgebogen. Dort liegt der Gummi nicht an. Zweck einer solchen Ausbildung ist es, eine rückstellweiche, kardanische Bewegung in Richtung des Ovals zu ermöglichen. Durch die von vornherein vorgesehenen offenen Spalte zwischen Gummiteil und Aufnahmeauge tritt beim Einsatz im rauheren Betrieb, insbesondere als Stabilisatorstablagerung, der vorbeschriebene Verschleiß an den Spalten auf.

Aufgabe der Erfindung ist es demgegenüber, eine möglichst zwischen dem Innenteil bzw. Aufnahmeauge und Gummimetallelement auch bei kardanischen Bewegungen dichte und damit verschleißfreie Ausführung einer Gummi-Metall-Buchse zu schaffen.

Diese Aufgabe wird mit den Merkmalen des Anspruchs 1 gelöst.

Gemäß Anspruch 1 besteht das Aufnahmeauge aus zwei zusammenspannbaren Lagerhalbschalen, mit denen am Ort des Einbaus eine hohe radiale Spannkraft aufgebracht werden kann. Die Höhe der Gummischichten bzw. der Stollen nehmen zu ihren äußeren Enden hin in Querrichtung im nicht verspannten Zustand zu. Dadurch wird erreicht, daß beim radialen Zusammenspannen im Aufnahmeauge in den Seitenbereichen des Gummis im Vergleich zum mittleren Bereich ein höherer Gummidruck erhalten wird. Bei kardanischen Bewegungen dichten somit die seitlichen Randüberhöhungen das Lager wirksam ab, so daß keine reibenden Staubpartikel oder Wasser, insbesondere bei einer Stabilisatorlagerung, eindringen können. Weiter wird einer unerwünschten Querdehnung des Gummis entgegengewirkt.

Mit den Merkmalen des Anspruchs 2 wird eine vorteilhafte Weiterbildung erreicht, wobei im unverspannten Zustand die Lagerhalbschalen bereits flächig auf der Außenkontur des Gummimetallelements anliegen und keine Anlagekanten, die zu einer Beschädigung der Gummischicht beim Zusammenspannen führen könnten, gebildet werden. Die Lagerhalbschalen werden bei der Endmontage etwa um den Betrag der Exzentrizität zusammengespannt, wobei sich der Gummi, insbesondere der äußeren Gummischicht, so verteilt, daß der gesamte Bereich zwischen dem Innenteil und dem Aufnahmeauge gleichmäßig im jeweiligen Axialbereich unter etwa gleicher Druckvorspannung ausgefüllt ist.

Mit den Merkmalen des Anspruchs 3 wird erreicht, daß der mit einer unterbrochenen Gummischicht versehene Metallstreifen leichter gewickelt werden kann. Die durch die Unterbrechung auftretenden Schlitze sollen dabei so schmal sein, daß sie beim Zusammenspannen durch die Druckspannung wieder geschlossen werden.

Mit den Merkmalen des Anspruchs 4 und 5 wird erreicht, daß der Metallstreifen mit möglichst wenig Spannung in den Gummistollen gewickelt werden kann und andererseits die dabei entstehenden Schlitze nicht zu weit werden.

Auch die Merkmale des Anspruchs 6 dienen dazu, den Wickelvorgang zu erleichtern.

Die Erfindung wird anhand zweier Ausführungsbeispiele mit weiteren Merkmalen, Einzelheiten und Vorteilen im folgenden näher erläutert.

Es zeigen

Fig. 1 eine Ansicht in Querrichtung eines bandförmigen Gummimetallelements,

Fig. 2 eine Ansicht in Längsrichtung des Gummimetallelements nach Fig. 1,

Fig. 3 einen Stabilisatorstab mit teilweise aufgewickeltem bandförmigen Gummimetallelement im unbelasteten Zustand,

Fig. 4 einen Längsschnitt durch eine Gummi-Metall-Buchse an einem Stabilisatorstab mit einem Gummimetallelement gemäß Fig. 1,

Fig. 5 einen Querschnitt durch das Stabilisatorlager nach Fig. 4,

Fig. 6 eine weitere Ausführungsform eines bandförmigen Gummimetallelements,

Fig. 7 einen Querschnitt durch ein Gummimetallelement mit durchgehenden Gummischichten,

Fig. 8 einen Längsschnitt durch das Gummimetallelement gemäß Fig. 7.

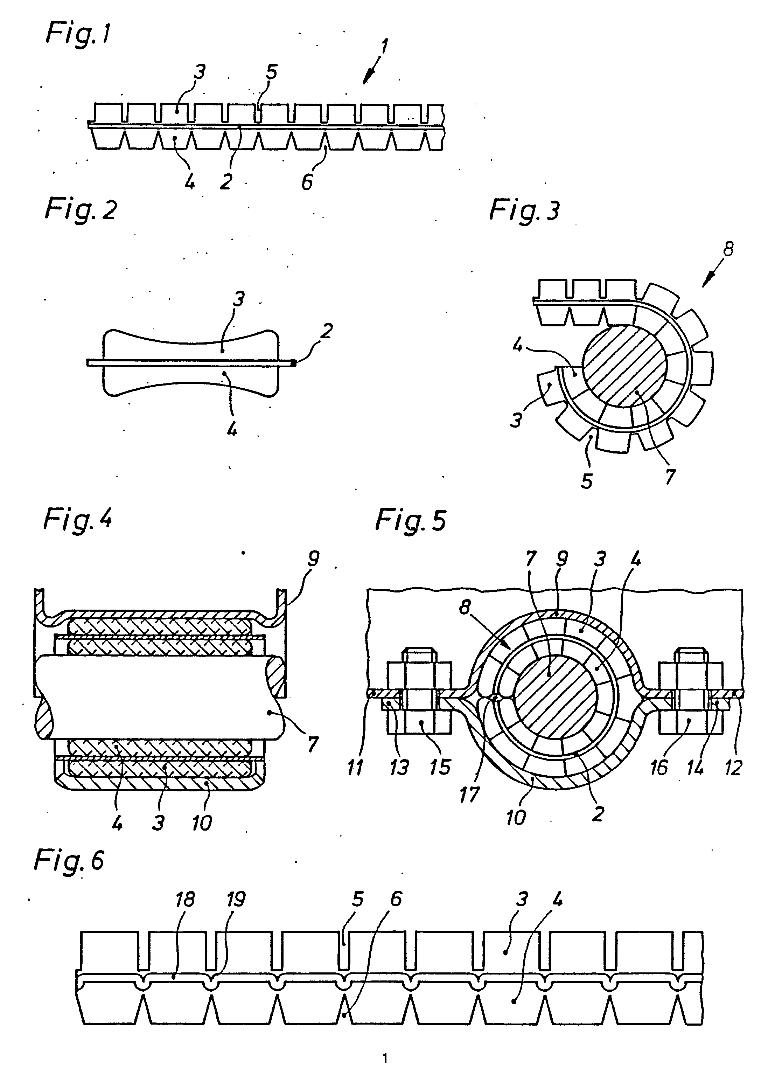

In Fig. 1 ist ein Gummimetallband 1 dargestellt, das aus einem Metallstreifen 2 und beiderseits aufvulkanisierten Gummistollen 3, 4 besteht. Die oberen Gummistollen 3 sind im Querschnitt rechteckig geformt und durch im Querschnitt rechtwinklige Schlitze 5 voneinander geteilt. Die unteren Gummistollen 4 sind dagegen trapezförmig geformt und durch V-förmige Schlitze 6 getrennt. Das Gummimetallband 1 kann beliebig lang sein.

In Fig. 2 ist eine Ansicht in Längsrichtung des Gummimetallbands 1 dargestellt. Daraus ist zu ersehen, daß der Metallstreifen 2 seitlich über die Gummistollen 3, 4 vorsteht. Die Gummistollen 3, 4 steigen in ihrer Höhe zur Seite hin an.

In Fig. 3 ist ein Stabilisatorstab 7 im Querschnitt gezeigt. Vom Gummimetallband 1 ist hier bereits ein Stück (Gummimetallelement 8) in geeigneter Länge abgeschnitten und teilweise um den Stabilisatorstab 7 gewickelt. Im linken, oberen Bereich ist das Gummimetallelement noch im gestreckten Zustand gemäß der Form aus Fig. 1 zu erkennen. Im gewickelten Zustand liegen die Stollen 4 aneinander, bzw. sind die V-förmigen Schlitze 6 geschlossen. Die Schlitze 5 zwischen den äußeren Gummistollen 3 sind dagegen V-förmig aufgespreizt.

In den Fig. 4 und 5 ist der Stabilisatorstab 7 im montierten Zustand dargestellt. Das Gummimetallelement 8 und der Stabilisatorstab 7 sind dabei zwischen zwei Lagerhalbschalen 9, 10 gespannt. Die Lagerhalbschale 9 ist mit dem Fahrzeugrahmen verbunden oder direkt als Einbuchtung in einem Rahmenblech ausgebildet. In etwa horizontaler Richtung verlaufen zwei seitliche Flansche 11, 12. Die zweite Lagerhalbschale 10 ist ein separates Teil mit seitlichen Flanschen 13, 14 und ist mit Hilfe von Schraubverbindungen 15, 16 mit der ersten Lagerhalbschale 9 verschraubt. Beim Anziehen der Schraubverbindungen 15, 16 wird das im unbelasteten Zustand die Form aus Fig. 4 aufweisende Gummimetallelement 8 zusammengepreßt. Der Gummi füllt dann insbesondere die Schlitze 5 aus und bildet die in Fig. 5 dargestellten, praktisch durchgehenden Gummischichten aus den Stollen 3, 4. Der Metallstreifen 2 ist nach dem Zusammenspannen nicht ganz geschlossen, sondern durch einen Querspalt 17 getrennt.

Aus Fig. 4 ist zu erkennen, daß der Gummi bzw. die Gummistollen im vorgespannten Zustand eine relativ dünne Schicht bilden, die nur wenig nach der Seite hin beim Zusammenspannen der Schraubverbindungen 15, 16 verdrängt wird, wenn eine Ausbildung der Stollen mit einer im Vergleich zur Mitte größeren Seitenhöhe gewählt wird.

In Fig. 6 ist eine andere Ausführungsform eines Gummimetallbandes gezeigt, bei der ein Metallstreifen 18 querverlaufende Falten 19 im Bereich der Spalte 5, 6 aufweist.

Die Stollen 3, 4 sind genauso wie im Ausführungsbeispiel gemäß Fig. 1 angeordnet. Die Falten 19 werden beim Wickeln dieses Gummimetallbandes auf einen Stabilisatorstab 7 aufgefaltet. Dadurch wird erreicht, daß der Wikkelvorgang noch einfacher und weniger kraftanstrengend wird. Da das Metallband 18 innerhalb der Buchse eine Querdehnung verhindern soll, ist der Metallstreifen 18 betriebsmäßig nur in Zugrichtung belastet, so daß die Falten 19 die Funktion der Buchse nicht beeinträchtigen.

Die dargestellte erste Ausführungsform einer Buchse (Wickelbuchse) hat folgende Funktion: Vom Gummimetallband 1 wird eine für einen Wickel um den Stabilisator 7 ausreichende Länge, das Gummimetallelement 8, abgeschnitten. (Die Herstellung der Gummimetallbänder 1 könnte auch bereits in der gewünschten Länge erfolgen, bzw. das Abschneiden des Gummimetallelements 8 in seiner erforderlichen Länge braucht nicht vor Ort bei der Kraftfahrzeugmontage geschehen). Das Gummimetallelement 8 wird dann um den Stabilisatorstab 7 gewickelt. Wegen der V-förmigen Spalte 6 behindern sich die inneren Gummistollen 4 beim Wickelvorgang nicht. Die äußeren Gummistollen 3 werden durch Auseinanderspreizen der Schlitze 5 voneinander entfernt. Da durch den Wickelvorgang keine Spannungen im Gummi auftreten, ist der Wickelvorgang einfach durchzuführen und das gewickelte Gummimetallelement 8 bleibt in diesem Zustand auf dem Stabilisatorstab 7 gewickelt. Das Gummimetallelement 8 kann somit nach dem Wickelvorgang nicht mehr vom Stabilisatorstab 7 abfallen, wodurch ein Monteur wieder beide Hände für weitere Arbeiten, insbesondere das Aufsetzen und Zusammenspannen der Lagerhalbschalen für das Aufnahmeauge, frei hat.

Nach dem Wickelvorgang wird die freie Lagerhalbschale 10 auf die rahmenseitige Halbschale 9 aufgesetzt und die Schraubverbindungen 15, 16 angezogen. Dabei werden die Gummistollen 3, 4 zusammengepreßt und erfüllen praktisch den gesamten Raum zwischen dem Stabilisatorstab 7 und den Halbschalen 9, 10.

Wenn betriebsmäßig der Stabilisatorstab 7 Torsionsbewegungen durchführt, werden diese innerhalb der Gummischichten, bestehend aus den Stollen 3, 4, molekular aufgenommen. Das Gummimetallelement 8 wird dabei ohne Gleitbewegungen sowohl am Stabilisatorstab 7 als auch im Aufnahmeauge innerhalb der Lagerschalen 9, 10 durch Reibungshaftung gehalten. Toleranzen im Aufnahmeauge werden dabei ohne weiteres ausgeglichen.

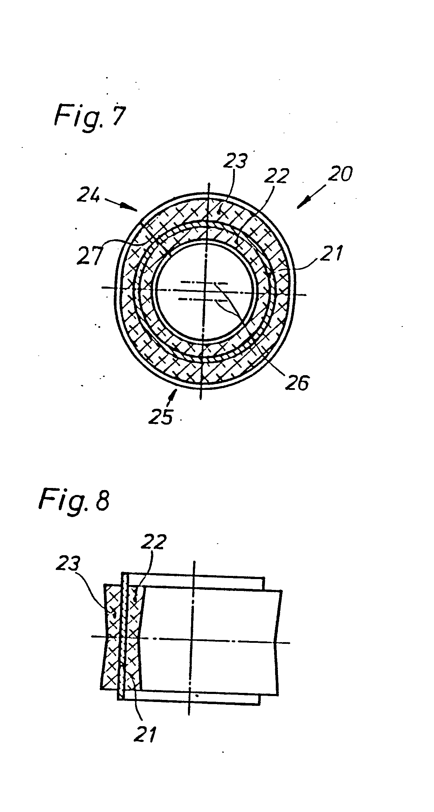

In Fig. 7 und 8 ist eine andere Ausführungsform eines Gummimetallelements 20 dargestellt. Dabei ist auf einem Metallstreifen 21 beidseitig je eine Gummischicht 22 und 23 aufvulkanisiert. Der Metallstreifen 21 und die innere Gummischicht 22 bilden im Querschnitt konzentrische Kreise. Die äußere Gummischicht 23 dagegen hat im Querschnitt die Form eines oberen und unteren Halbkreises 24, 25, die um die Exzentrizität 26 gegeneinander versetzt sind. Die Radien der äußeren Halbkreise 24, 25 entsprechen den Radien der (nicht dargestellten) äußeren Lagerhalbschalen, die das Aufnahmeauge bilden.

Aus Fig. 8 ist zu erkennen, daß die Gummischichten 22, 23 auch bei dieser Ausführungsform nach den seitlichen Enden hin stärker werden, damit dort im vorgespannten Zustand die Druckspannung im Vergleich zum Mittelbereich höher liegt.

Die Ausführungsform gemäß der Fig. 7 und 8 hat folgende Funktion :

Zur Montage wird das Gummimetallelement 20 am durchgehenden Spalt 27 aufgebogen, über den Stabilisatorstab 7 gesteckt und wieder zugebogen. Dadurch ist das Gummimetallelement 20 am Stabilisatorstab gehalten. Nun wird es so gedreht, daß der obere und untere Halbkreis 24, 25 der äußeren Gummischicht 23 in Richtung auf die Lagerhalbschalen des Aufnahmeauges zu liegen kommen. Beim Zusammenspannen der Lagerhalbschalen liegen die Halbkreise 24, 25 dann bereits im unbelasteten Zustand in den Lagerhalbschalen flächig an. Die Lagerhalbschalen werden dann etwa um den Betrag der Exzentrizität 26 zusammengespannt, wobei sich insbesondere der Gummi der äußeren Gummischicht 23 so verteilt, daß der gesamte Bereich zwischen dem Stabilisatorstab und dem Aufnahmeauge gleichmäßig ausgefüllt ist. Auch hier wird, wie im Zusammenhang mit dem ersten Ausführungsbeispiel dargestellt, eine Torsionsbewegung des Stabilisatorstabes molekular innerhalb der Gummischichten aufgenommen.

**Patentansprüche**

1. Gummi-Metall-Buchse, insbesondere für die Lagerung eines Stabilisators an einem Kraftfahrzeug, mit einem die Gummi-Metall-Buchse umschließenden Aufnahmeauge, mit Gummimetallelementen innerhalb des Aufnahmeauges, die ein zu lagerndes Innenteil, insbesondere den Stabilisatorstab (7), umschließen und die im Aufnahmeauge radial verspannbar sind, wobei nur ein Gummimetallelement (20) vorgesehen ist, das aus einem biegsamen Metallstreifen (21) mit einem im wesentlichen axial verlaufenden, durchgehenden Querspalt (17 ; 27) besteht und auf den Metallstreifen (21) beidseitig je eine Gummischicht (22, 23) aufvulkanisiert ist, dadurch gekennzeichnet, daß das Aufnahmeauge aus zwei zusammenspannbaren Lagerhalbschalen (9, 10) besteht, und daß die Höhe der Gummischichten (22, 23) bzw. der Stollen zu ihren äußeren Enden hin in Querrichtung im nicht verspannten Zustand zunimmt, um bei der radialen Zusammenspannung im Aufnahmeauge in den Seitenbereichen des Gummis im Vergleich zum mittleren Bereich einen höheren Gummidruck zu erhalten.

2. Gummi-Metall-Buchse nach Anspruch 1, dadurch gekennzeichnet, daß der Metallstreifen (21) und die innere Gummischicht (22) das Innenteil (7) umgeben und in dem auf das Innenteil (7) aufgesteckten Zustand im radialen Querschnitt konzentrische Kreise bilden und der Metallstreifen (21) und die äußere Gummischicht (23) vom Aufnahmeauge unter radialer Vorspannung umschlossen sind, und daß die Außenkontur der äußeren Gummischicht (23) in ihrem auf das Innenteil (7) aufgesteckten, nicht radial vorgespannten Zustand die Form zweier durch ein gerades Stück (Exzentrizität 26) verbundener Halbzylinder (24, 25) aufweist, wobei die Radien der Halbzylinder (24, 25) etwa den Radien der halbzylindrischen Lagerschalen des Aufnahmeauges entsprechen.

3. Gummi-Metall-Buchse nach Anspruch 1 oder 2, dadurch gekennzeichnet, daß wenigstens eine Gummischicht in einzelne in Querrichtung des Metallstreifens (21) verlaufende, aufvulkanisierte Stollen unterteilt ist, wodurch zwischen den Stollen Schlitze gebildet sind.

4. Gummi-Metall-Buchse nach Anspruch 3, dadurch gekennzeichnet, daß die in Querrichtung verlaufenden Schlitze auf der dem Aufnahmeauge zugewandten Seite schmaler sind als die auf der dem Innenteil zugewandten Seite.

5. Gummi-Metall-Buchse nach einem der Ansprüche 3 oder 4, dadurch gekennzeichnet, daß die Schlitze auf wenigstens einer Seite V-förmig ausgebildet sind.

6. Gummi-Metall-Buchse nach einem der Ansprüche 1 bis 5, dadurch gekennzeichnet, daß der Metallstreifen (21) mit Löchern oder querverlaufenden Aussparungen oder Falten versehen ist.

**Claims**

1. A rubber-metal bush, in particular for mounting a stabiliser in a motor vehicle, with a mounting opening surrounding the rubber-metal bush, with rubber-metal elements within the mounting opening which surround an inner component to be mounted, the stabiliser rod (7) in particular, and which can be radially tightened in the mounting opening, provision only being made for one rubber-metal element (20) which consists of a flexible metal strip (21) with an essentially axial continuous through gap (17 ; 27) and one rubber layer (22, 23) being respectively attached by vulcanisation on both sides, characterised in that the mounting opening consists of two mounting half-shells (9, 10) which can be tightened together, and that the height of the rubber layers (22, 23) or pads increases in their non-tightened state in the transverse direction towards their outer ends, so as to receive during the radial tightening in the mounting opening, a higher rubber pressure in the lateral zones of the rubber in comparison with the central zone.

2. A rubber-metal bush according to claim 1, characterised in that the metal strip (21) and the inner rubber layer (22) surround the inner component (7) and that they form, when mounted on the inner component (7), concentric circles in the radial cross section and that the metal strip (21) and the outer rubber layer (23) are surrounded by the mounting opening with radial prestressing, and that the outer contour of the external rubber layer (23), when mounted on the inner component (7) and not being radially prestressed, has the shape of two half-cylinders (24, 25) joined by a straight portion (eccentricity 26), the radii of the half-cylinders (24, 25) approximately corresponding to the radii of the half-cylindrical mounting shells of the mounting opening.

3. A rubber-metal bush according to claim 1 or 2, characterised in that at least one rubber layer is subdivided into individual pads attached by vulcanisation, lying in the transverse direction of the metal strip (21), whereby slits are formed between the pads.

4. A rubber-metal bush according to claim 3, characterised in that the slits lying in the transverse direction are narrower on the side facing the mounting opening than on the side facing the inner component.

5. A rubber-metal bush according to one of claims 3 or 4, characterised in that the slits have a V shape on at least one side.

6. A rubber-metal bush according to one of claims 1 to 5, characterised in that the metal strip (21) is provided with holes or transverse recesses or folds.

## Revendications

1. Douille métal-caoutchouc, en particulier pour le montage d'un amortisseur sur un véhicule automobile, avec un œil de logement qui entoure la douille métal-caoutchouc, avec des éléments de métal-caoutchouc qui, à l'intérieur de l'œil de logement, entourent la pièce interne à monter, en particulier la barre d'amortisseur (7), et qui peuvent être serrés radialement dans l'œil de logement, un seul élément de métal-caoutchouc (20) étant prévu, qui se compose d'une bande de métal flexible (21) comportant une fente transversale (17 ; 27) qui s'étend de bout en bout en direction sensiblement axiale, bande de métal (21) sur chaque face de laquelle une couche de caoutchouc (22, 23) est fixée par vulcanisation, caractérisée en ce que l'œil de logement se compose de deux demi-coquilles de coussinet (9, 10) serrables l'une contre l'autre et en ce qu'à l'état non serré, la hauteur des couches de caoutchouc (22, 23) ou des crampons augmente en direction transversale vers leurs extrémités extérieures, afin d'obtenir, lors du serrage radial dans l'œil de logement, une compression du caoutchouc plus élevée dans les régions latérales du caoutchouc en comparaison de la région moyenne.

2. Douille métal-caoutchouc selon la revendication 1, caractérisée en ce que la bande de métal (21) et la couche de caoutchouc intérieure (22) entourent la pièce interne (7) et forment, à l'état monté sur la pièce interne (7), des cercles concentriques en coupe radiale, la bande de métal (21) et la couche de caoutchouc extérieure (23) étant entourées par l'œil de logement sous précontrainte radiale, et en ce que le contour extérieur de la couche de caoutchouc extérieure (23) présente, dans son état monté sur la pièce interne (7) et non précontraint, la forme de deux demi-cylindres (24, 25) reliés par une partie droite (excentricité 26), les rayons des demi-cylindres (24, 25) correspondant à peu près aux rayons des coquilles de coussinet demi-cylindriques de l'œil de logement.

3. Douille métal-caoutchouc selon la revendication 1 ou 2, caractérisée en ce qu'au moins l'une des couches de caoutchouc est subdivisée en crampons individuels qui s'étendent dans la direction transversale de la bande de métal (21) et qui sont fixés par vulcanisation, ce qui fait que des fentes sont formées entre les crampons.

4. Douille métal-caoutchouc selon la revendication 3, caractérisée en ce que les fentes qui s'étendent en direction transversale sont plus étroites du côté de l'œil de logement que du côté de la pièce interne.

5. Douille métal-caoutchouc selon la revendication 3 ou 4, caractérisée en ce que les fentes sont réalisées en forme de V, au moins d'un côté.

6. Douille métal-caoutchouc selon l'une quelconque des revendications 1 à 5, caractérisée en ce que la bande de métal (21) est munie de trous ou d'évidements ou de plis s'étendant transversalement.

*Fig.1*

*Fig. 2*

*Fig. 3*

*Fig. 4*

*Fig. 5*

*Fig. 6*

## Fig. 7

## Fig. 8